Europäisches Patentamt

European Patent Office

Office européen des brevets

(19)

(11) Publication number: **0 221 590**
**B1**

# EUROPEAN PATENT SPECIFICATION

(12)

(45) Date of publication of the patent specification:
18.04.90

(51) Int. Cl.⁴: **A47J 31/057**

(21) Application number: 86201728.2

(22) Date of filing: 06.10.86

(54) **A coffee making apparatus.**

(30) Priority: 07.10.85 NL 8502728

(43) Date of publication of application:
13.05.87 Bulletin 87/20

(45) Publication of the grant of the patent:
18.04.90 Bulletin 90/16

(84) Designated Contracting States:
DE GB NL SE

(56) References cited:
DE-A- 1 579 506
DE-A- 2 307 762
DE-A- 2 635 047

(73) Proprietor: Smitdesign B.V., Utrechtsestraatweg 26,
NL-3958 BP Amerongen(NL)

(72) Inventor: Kraan, Diederik, Hazeleger 22, NL-3958 EM
Amerongen(NL)

(74) Representative: Smulders, Theodorus A.H.J., Ir. et al,
Vereenigde Octrooibureaux Nieuwe Parklaan 107,
NL-2587 BP 's-Gravenhage(NL)

## Description

The present invention relates to a coffee making apparatus of the type comprising a water reservoir arranged in a high position in the apparatus, the under-side of said reservoir being connected to the bottom end of a riser having a through-flow heater or similar boiling element, in which riser heated water is driven upwardly by generated steam bubbles up to the top end of the riser, disposed above the highest filling level of the reservoir, from which location it is discharged laterally to an outlet opening above a ground coffee container, in particular a coffee filter disposed above a coffee pot, said coffee making apparatus further including means for supplying unheated water to the stream of heated water in the riser in such quantities that the water temperature nevertheless remains above a predetermined lower limit, as disclosed in DE-A 2 635 047.

In coffee making apparatuses without cold water addition, the water temperature in the riser may rise substantially, e.g. to 99.5°C, while the temperature of the water flowing onto the ground coffee in the filter varies from 90°C to above 97°C. On the ground of considerations of flavour, certain countries impose the requirement that the water coming into contact with the ground coffee should have a temperature ranging between 92°C and 96°C during 90% of the contact time, while, moreover, the temperature of the total quantity of coffee made may not be lower than 80°C. To meet both requirements, it is not sufficient to simply proceed to a continuous cooling step, e.g. by continuously adding cold water in a manner known from DE-A 2 635 047, or by conducting all of the heated water before it flows onto the ground coffee, to an intermediate reservoir, wherein it remains until the temperature has fallen below 96°C, or by providing the riser for instance with a cooling jacket in which cold water is being circulated in heat-exchanging contact with the hot water in the riser. For with such continuous cooling steps, the temperature is reduced throughout the entire coffee making cycle and while it will not rise above 96°C, it will remain below 92°C, too, during the major part of the cycle, so that also the minimum temperature of 80°C for the brew will often not be attained.

It is an object of the present invention to provide a coffee making apparatus of the above described type which ensures in a reliable manner that the temperature curve of the water poured onto the ground coffee is as closely as possible below a chosen temperature value, e.g. 96°C, and is as level as possible.

To this end, in the coffee making apparatus according to the present invention, the means for adding unheated water to the stream of hot water in the riser comprise a separate reservoir, to be referred to hereinafter as the cooling water tank for unheated water, mounted at the side of the riser in such a manner that part of the tank, which can contain the quantity of cold water required for the desired extent of cooling, is present between the highest filling level and the switch-off level of the water reservoir, the bottom of the cooling water tank being connected to the riser by means of a feed-through pipe, thin relative to said riser, at a connection point lying above the through-flow heater.

In the coffee making apparatus according to the present invention, the water can be heated to the lower limit of the desired temperature range for the water flowing onto the ground coffee has been reached, after which further heating is controlled by the metered addition of cold water. The initially quickly rising temperature curve, consequently, is levelled off and remains below the upper limit of the desired temperature range.

The supply of unheated water is automatically set into operation at the precise moment, without it being necessary to use elements such as sensors, valves and the like, derangeable by lime deposition, which is unavoidable in a coffee making apparatus.

The present invention is based on the insight that use can be made of the phenomenon that, from the beginning to the end of the coffee making cycle, the size of the steam bubbles in the riser portion above the through-flow heater increases continuously and, consequently, the weight of the column above the connection point of the feed-through pipe from the cooling water tank continuously decreases, in order to determine the moment when water from the cooling water tank starts streaming into the riser.

Initially, due to the mutually open communication, the level of the water in the water reservoir, the water in the cooling tank and the water in the riser is equal.

When the coffee making apparatus is put into operation, the water level in the riser rises because water contained therein is driven up by steam bubbles and is discharged to the filter, while the level in the water reservoir falls. As the steam bubbles formed in the through-flow heater are small initially, and hence initially water with a minor proportion of steam is driven up the riser, there is initially such a pressure condition at the connection point of the feed-through pipe to the riser that the water level in the cooling tank remains at the same level. It is true that the water column in the riser above the connection point is higher than before the apparatus was put into operation, but as a result of the steam added therein, the pressure of the column above the connection point initially remains substantially constant. Not until steam bubbles are generated having such sizes that, at the level of the connection point, the pressure of the column in the riser becomes lower than the pressure of the cooling water in the feed-through pipe does the level in the cooling tank start to drop, with unheated water flowing into the riser. The place of the connection point and the position of the cooling water tank can be determined experimentally per type of coffee making apparatus in such a manner that cooling water does not start to flow until after the temperature of the water in the riser has reached a pre-determined value, e.g. has exceeded the lower limit of 92°C.

In order to increase the quantity of cold water supplied to the riser, at rising temperature in the riser, according to the present invention, the cold water tank may have a cross-section increasing from the top downwards. The specific configuration of the cooling water tank can again be determined empirically, directed at attaining a level temperature curve of the water in the riser. For instance, in the case of a rising temperature in the riser and a regular drop in level in the cooling tank, an ever increasing quantity of water can be supplied to the riser per unit of time, so that the water temperature in the riser is always kept just below the desired maximum temperature of e.g. 96°C.

In order to minimally disturb the regularity of the water transport in the riser when cold water is supplied, according to the present invention, the feed-through pipe from the cold water tank towards the connection point to the riser may have a loop disposed below the connection point. Such a loop, functioning as water seal, in the relatively thin feed-through pipe prevents steam bubbles from reaching the cooling water tank via said feed-through pipe, without the necessity of using a non-return valve at the connection point. Moreover, the loop provides for the dampening of pressure fluctuations caused by the passage of air bubbles at the connection point, so that a regular cold water supply is ensured.

In a constructively simple embodiment of the coffee making apparatus wherein an adequate filling of the cooling tank is ensured, the cooling tank, made of light material, is mounted for limited vertical movement in the water reservoir, and communicates with its open top end with the atmosphere and rests with the edge of a relatively large bottom opening on a sealing seat surrounding the inlet of the feed-through pipe to the riser.

When filling the water reservoir, initially the empty cooling water tank floats upwardly, so that the bottom opening is lifted off the seat and water can flow from the water reservoir into the cooling water tank. Not until after the water reservoir has been filled up to the desired level and no further water is added does the level in the cooling water tank attain approximately the same height as the filling level in the water reservoir and does the filled cooling tank sink onto the seat. From this moment, the quantity of water contained in the cooling tank is entirely isolated from the water reservoir and can flow away towards the riser only via the feed-through pipe.

The under-side of the cooling water tank can be guided axially in such a manner that the tank can be lifted in a simple manner to above the inlet of the feed-through pipe and be discharged laterally for cleaning purposes.

One embodiment of the coffee making apparatus according to the present invention will now be described, by way of example, with reference to the accompanying drawings, in which:

Fig. 1 diagrammatically shows an arrangement of the coffee making apparatus in operation:

Fig. 2 shows in more detail the boxed portion II of the coffee making apparatus shown in Fig. 1; and

Figs. 3A and B show two positions of the cooling water tank during its filling and in operation.

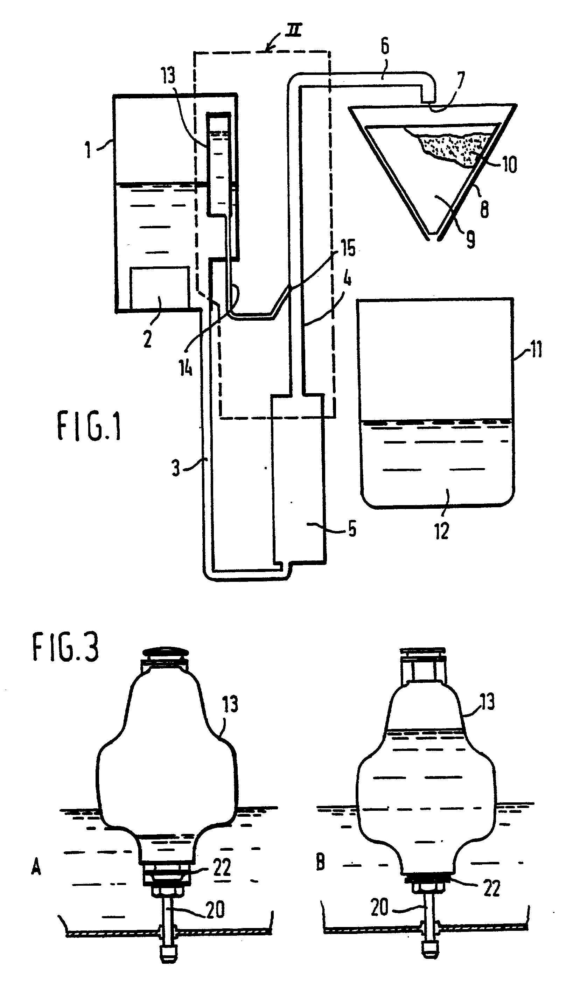

According to the drawings, in particular Fig. 1, the coffee making apparatus in the embodiment shown comprises a water reservoir 1 arranged in a high position in the apparatus, said reservoir including in an otherwise known manner a level switch 2 and being connected at its lower end via a pipe 3 to the lower end of a riser 4 containing a water boiler such as a through-flow heater 5. The top end of riser 4 lies at a higher level than the highest filling level of the water reservoir 1. The top end or riser 4 is connected through a lateral overflow pipe 6 to an outflow opening 7 above a funnel 8 containing a filter 9 with ground coffee 10. Below funnel 8 is placed a receptacle 11, mostly a coffee pot, for receiving coffee brew 12.

In operation, the water in riser 4 is driven up by steam bubbles generated in through-flow heater 5 and the hot water flows via the outlet opening 7 onto the ground coffee 10. Extracted coffee 12 is received in the coffee pot 11.

A boiling-dry protection device ensures that through-flow heater 5 is switched off as soon as the water level in reservoir 1 has reached a pre-determined minimum value.

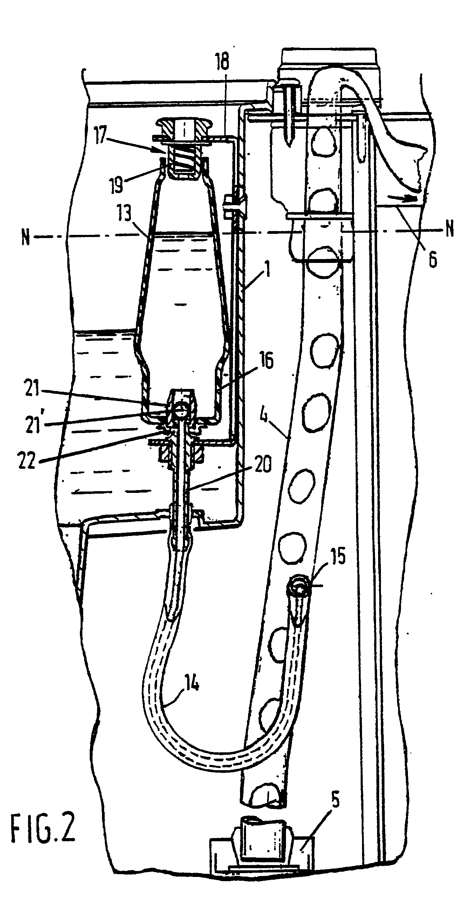

Referring to Fig. 2, means are described for the automatic control of the temperature of the water poured onto the ground coffee 10 via the outlet opening 7.

In water reservoir 1 is arranged a cooling water tank 13 whose bottom end is connected to a connection point 15 at the riser 4 by means of a feed-through pipe 14. Pipe 14 is thinner than riser 4 and has for instance a cross-section of 3 mm with a cross-section of the riser of 13 mm. In feed-through pipe 14 is formed below connection point 15 a depending loop.

The operation of the coffee making apparatus according to the present invention with water temperature regulating cooling water supply is as follows.

At the beginning of the coffee making cycle the water level in water reservoir 1, in cooling tank 13 and in riser 4 is equal, e.g. as indicated by line N-N (Fig. 2). When the coffee making apparatus is switched on the water contained in the portion of the riser within through-flow heater 5 is heated and steam bubbles are generated therein which increase in size according as the level in the water reservoir drops. As soon as steam bubbles are formed, these rise in riser 4, thereby reducing the relative density of the column in riser 4, the hydrostatic equilibrium between the water reservoir on the one hand and the riser on the other hand is disturbed in the sense that the column in the riser becomes lighter, so that the water in the riser, when heated, starts rising, whereas the level in the water reservoir drops. Initially, this is not yet the case with the cold water contained in the cooling water reservoir 13, in spite of the open communication at the connection point 15. In fact, the influence of the drop in density of the water is riser 4 in the portion situated above the connection point is less than of the entire contents of riser 4, so that the water displacement from water cooling tank 13 by means of pipe 14 and connection point 15 in riser 4 starts at a later moment, i.e. not until in the course of the cycle time the size of the steam bubbles in the riser has increased to the extent that the hydrostatic equilibrium at the level of the connection point 15 is disturbed in such a manner that water starts flowing away from cooling tank 13. It is thus possible to experimentally determine, by selection of the location of connection point 15, the moment in the coffee making cycle when cooling water from tank 13 is supplied to riser 4.

When e.g. the temperature of the water in overflow pipe 6 has to remain between 92°C and 96°C, it can be ensured that cooling water from tank 13 is not supplied until after the water temperature of 92°C is attained at the top end of riser 4. The quantity of water supplied can be regulated in such a manner that the temperature always remains below 96°C.

Such a controlled water supply which, due to the ever rising temperature in riser 4, requires an ever increasing quantity of cooling water supply, can be achieved in a simple manner by imparting to cooling water tank 13 a cross-sectional area increasing from the top downwards. Fig. 2 shows that the cooling water tank increasingly broadens in downward direction and Fig. 3 shows that also in elevational view, as seen in Fig. 2 from the left, cooling water tank 13 has a larger cross-sectional area at the bottom than at the top.

The specific configuration of the cooling water tank, depending on the further flow conditions in the coffee making apparatus, can be determined experimentally for obtaining a level temperature curve in the overflow pipe 6.

In order that cooling tank 13 may be filled up to the desired level with cold water in a simple manner, the tank is made of light material, e.g. synthetic plastics material, and is fitted with a large bottom opening 16 and a top opening 17.

In water reservoir 1 is mounted a clip 18 carrying at its top a hollow guide pin 19 extending into the top opening 17 of tank 13. On the under-side, clip 18 carries a feed-through pipe 20 whose top end is designed as a hollow guide pin 21 having a lateral opening 21'. Below guide 21 is provided a sealing seat 22.

When water reservoir 1 and cooling water tank 13 are empty this tank rests on the seat 22.

When water is poured into reservoir 1, this initially imparts buoyancy to the empty tank 13, so that water flows into cooling tank 13 via lateral opening 21' in guide pin 21. This is continued until the water reservoir 1 has been filled up to the desired level, at which moment also cooling water tank 13 has been filled up to that level. By gravity, cooling water tank 13 sinks onto seat 22, after which any communication between cooling tank 13 and reservoir 1 is interrupted and cooling tank 13 can be emptied only via feed-through pipe 20 and feed-through pipe 14.

The start of the filling of cooling tank 13 is shown in Fig. 3A.

Fig. 3B shows the situation during operation of the coffee making apparatus, in which the level in the water reservoir is falling, whereas the level in cooling water tank 13 is maintained.

For removing cooling water tank 13 from the water reservoir 1, guide pin 19 can be lifted, against spring tension, relative to clip 18, so that tank 13 can be tilted laterally on seat 22 and be removed.

Feed-through pipe 14 connects with a depending loop to connection point 15, so that in feed-through pipe 14 is formed a water seal which prevents steam bubbles from riser 4 from reaching the cooling tank 13 via connection point 15.

## Claims

1. A coffee making apparatus of the type comprising a water reservoir (1) arranged in a high position in the apparatus, the bottom part of said reservoir being connected (3) to the bottom end of a riser (4) fitted with a through-flow heater (5) or like boiling element, in which riser heated water is driven upwardly by generated steam bubbles up to the top end of the riser (4) situated above the highest filling level of the reservoir, from which location it is discharged laterally (6) to an outlet opening (7) over a ground coffee container (8), said coffee making apparatus further including means (13, 14) for supplying unheated water to the stream of heated water in the riser (4) in such quantities that the water temperature nevertheless remains above a predetermined lower limit, characterized in that the means (13, 14) for supplying unheated water to the stream of heated water in the riser (4) comprise a separate reservoir for unheated water, to be referred to hereinafter as the cooling water tank (13), mounted at the side of the riser (4) in such a manner that a part of the tank (13), which can contain the quantity of cold water necessary for the desired extent of cooling, is disposed between the highest filling level and the switch-off level of the water reservoir (1), the bottom of the cooling water tank (13) being connected to the riser (4) via a feed-through pipe (14) thin relative to said riser at a connection point (15) lying above the through-flow heater (5).

2. A coffee making apparatus according to claim 1, characterized in that the cold water tank (13) has a cross-section increasing from the top downwards.

3. A coffee making apparatus according to claim 2, characterized in that the feed-through pipe (14) of the cooling water tank (13) to the connection point (15) to the riser (4) has a loop disposed below the connection point (15).

4. A coffee making apparatus according to claim 2 or 3, characterized in that the cooling water tank (13), made of light material, is mounted for limited vertical movement in the water reservoir (1), communicating with the open top end (17) with the atmosphere and resting with the edge of a relatively large bottom opening on a sealing seat (22) surrounding the inlet of the feed-through pipe (14) to the riser (4).

## Patentansprüche

1. Kaffeemaschine mit folgenden Merkmalen: an einer hohen Stelle innerhalb der Maschine ist ein Wasserbehälter (1) angebracht; der Bodenteil des Behälters ist mit dem bodenseitigen Ende eines Steigrohrs (4) verbunden (3), das an einem Durchflußerhitzer (5) oder einem ähnlichen Siedeelement angebracht ist, in dem Steigrohr erhitztes Wasser durch erzeugte Dampfblasen nach oben an das obere Ende des Steigrohrs (4) getrieben wird, das oberhalb des höchsten Füllstandes des Behälters gelegen ist, von wo aus das Wasser seitlich (6) zu einer Auslaßöffnung (7) über einen Behälter (8) mit gemahlenem Kaffee abfließt; die Kaffeemaschine weist eine Einrichtung (13, 14) auf, die dem in dem Steigrohr (4) befindlichen erhitzten Wasserstrom nur so viel unerhitztes Wasser zuführt, daß die Wassertemperaturen oberhalb einer vorbestimmten unteren Grenze bleiben, gekennzeichnet durch folgende Merkmale: die Einrichtung (13, 14), die dem in dem Steigrohr (4) befindlichen Strom erhitzten Wassers unerhitztes Wasser zuführt, enthält einen getrennten Behälter für unerhitztes Wasser, hier als Kühlwassergefäß (13) bezeichnet, der an der Seite des Steigrohrs (4) so angebracht ist, daß ein Teil des Gefäßes (13), welches das für das gewünschte Ausmaß an Kühlung notwendige kalte Wasser speichern kann, zwischen dem höchsten Füllstand und dem Ausschaltpegel des Wasserbehälters (1) angeordnet ist; der Boden des Kühlwassergefäßes (13) ist mit dem Steigrohr (4) über ein, verglichen mit dem Steigrohr (4), dünnes Durchleitungsrohr (14) verbunden, und zwar an einem Verbindungspunkt (15), der oberhalb des Durchflußerhitzers (5) liegt.

2. Kaffeemaschine nach Anspruch 1, dadurch gekennzeichnet, daß der Querschnitt des Kühlwassergefäßes (13) von oben nach unten zunimmt.

3. Kaffeemaschine nach Anspruch 2, dadurch gekennzeichnet, daß das Durchleitungsrohr (14) des Kühlwassergefäßes (13) zum Verbindungspunkt (15) mit dem Steigrohr (4) unterhalb des Verbindungspunktes (15) eine Schleife aufweist.

4. Kaffeemaschine nach Anspruch 2 oder 3, gekennzeichnet durch folgende Merkmale: das aus leichtem Material hergestellte Kühlwassergefäß (13) ist in dem Wasserbehälter (1) so angebracht, daß es eine begrenzte vertikale Bewegung ausführen kann; das offene obere Ende (17) ist mit der Umgebung verbunden; der Rand einer relativ großen Bodenöffnung sitzt auf einem Abdichtungssitz (22), der den Einlaß des mit dem Steigrohr (4) verbundenen Durchleitungsrohrs (14) umgibt.

## Revendications

1. Un appareil pour faire du café du type comportant un réservoir d'eau (1) disposé dans une haute position dans l'appareil, la partie de fond dudit réservoir étant relié (3) au bout de fond d'une colonne montante (4) ayant un réchauffeur de circulation (5) ou élément de chaudière similaire, dans quelle colonne montante de l'eau chauffée est conduite vers le haut par des bulles de vapeur produites jusqu'au bout supérieur de la colonne montante (4) situé au-dessus du niveau de remplissage le plus élevé du réservoir, laquelle eau est déchargée latéralement (6) de cette position vers un orifice de sortie (7) sur un récipient de café moulu (8), ledit appareil de préparation de café comportant également des moyens (13, 14) pour alimenter de l'eau non chauffée au filet d'eau chauffée dans la colonne montante (4) dans de telles quantités que la température de l'eau reste néanmoins au-dessus d'une limite inférieure déterminée, caractérisé en ce que les moyens (13, 14) pour alimenter de l'eau non chauffée au filet d'eau chauffée dans la colonne montante (4) comportent un réservoir séparé pour de l'eau non chauffée, désigné dans ce qui suit comme le réservoir d'eau de refroidisement (13), monté au côté de la colonne montante (4) de telle façon qu'une partie du réservoir (13), pouvant contenir la quantité d'eau froide nécessaire pour le degré de refroidisement voulu, est arrangée entre le niveau de remplissage le plus élevé et le niveau d'interruption du réservoir d'eau (1), le fond du réservoir d'eau de refroidisement (13) étant relié à la colonne montante (4) via un tuyau d'alimentation (14) mince par rapport à ladite colonne montante à un point de jonction (15) situé au-dessus du réchauffeur de circulation (5).

2. Un appareil pour faire du café selon la revendication 1, caractérisé en ce que le réservoir d'eau froide (13) a une section augmentant du haut en bas.

3. Un appareil pour faire du café selon la revendication 2, caractérisé en ce que le tuyau d'alimentation (14) du réservoir d'eau de refroidisement (13) vers le point de jonction (15) à la colonne montante (4) a un boucle prévu au-dessous du point de jonction (15).

4. Un appareil pour faire du café selon la revendication 2 ou 3, caractérisé en ce que le réservoir d'eau de refroidisement (13), fabriqué d'un matériau léger, est monté pour mouvement vertical limité dans le réservoir d'eau (1), communiquant avec le bout supérieur ouvert (17) avec l'atmosphère et restant avec le bord d'une ouverture de fond relativement grande sur un siège de scellement (22) environnant l'orifice d'entrée du tuyau d'alimentation (14) à la colonne montante (4).

FIG.1

FIG.3

FIG.2